# EUROPEAN PATENT APPLICATION

(11) **EP 3 905 473 A1**
(43) Date of publication of application: **03.11.2021**
(21) Application number: 19901575.1
(22) Date of filing: 27.11.2019
(51) Int. Cl.: H02J 7/00, H02J 7/02

(54) **BATTERY CHARGING AND DISCHARGING APPARATUS AND RECHARGEABLE POWER SOURCE**

(30) Priority: 28.12.2018 CN 201811623873
(71) Applicant: Envision Energy Co., Ltd., Jiangyin Wuxi Jiangsu 214443 (CN)
(72) Inventor: SHE, Hongwu, Wuxi, Jiangsu 214443 (CN); GUO, Dexiang, Wuxi, Jiangsu 214443 (CN); HU, Yang, Wuxi, Jiangsu 214443 (CN); XU, Xinyu, Wuxi, Jiangsu 214443 (CN); WU, Di, Wuxi, Jiangsu 214443 (CN); WANG, Jianning, Wuxi, Jiangsu 214443 (CN); LI, Wenyu, Wuxi, Jiangsu 214443 (CN); LI, Lei, Wuxi, Jiangsu 214443 (CN); ZHAO, Weijun, Wuxi, Jiangsu 214443 (CN); ZHANG, Lei, Wuxi, Jiangsu 214443 (CN)
(74) Representative: Miao, Tianhao
(86) International application number: PCT/CN2019/121230
(87) International publication number: WO 2020/134814

(57) **Abstract**

A battery charging and discharging device, comprising a power conversion unit configured to perform electrical conversion; a connecting end of the energy storage battery pack configured to connect an energy storage battery pack; a connecting end of charging and discharging configured to connect a charging power supply or a device to be charged or a load; a first charging switch and a second charging switch arranged in the connection line between the connecting end of charging and discharging and the input of the power conversion unit, and the connection line between the output of the power conversion unit and the connecting end of the energy storage battery pack respectively; and a first discharging switch and a second discharging switch arranged in the connection line between the connecting end of the energy storage battery pack and the input of the power conversion unit, and the connection line between the output of the power conversion unit and the connecting end of charging and discharging respectively. The disclosure also relates to a rechargeable power supply. Through the disclosure, may significantly reduce the cost of the device, cable and installation required by the charging and discharging device, thereby significantly reducing its total cost.

## Description

### TECHNICAL FIELD

The disclosure generally relates to the field of energy storage equipment, specifically, to a battery charging and discharging device. The disclosure also relates to a rechargeable power supply.

### BACKGROUND

The charging and discharging device is an important component of the energy storage system, and it is used to convert electrical power, such as power of the power grid so as to charge the energy storage battery, and convert the power of storage battery so as to charge the device to be charged or supply power to the load.

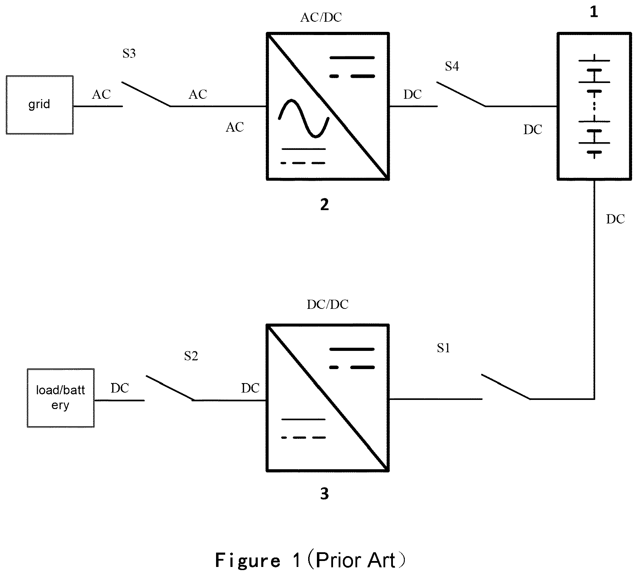

At present, different power conversion units are mainly used to charge and discharge the battery. For example, as shown in Figure 1, Battery 1 is charged from the grid via a first power conversion unit 2 and a second power conversion unit 3 is used to supply power to a load or battery. This results in higher device costs, circuit costs, and installation space costs.

A charging and discharging device disclosed by a Chinese patent application CN201710089566.X entitled "Charging and discharging device and mobile charging vehicle including the charging and discharging device", in which the converter module may operate selectively in AC/DC mode or DC/DC mode. In AC/DC mode, the input of the converter module is connected to an external AC power supply, and the output is connected to a battery pack or an object to be charged, so that the AC of the external AC power supply is converted to DC and therefore may charge the battery pack or object to be charged; in DC/DC mode, the input of the converter module is connected to a battery pack, and the output is connected to object to be charged, then the battery pack may charge the object to be charged. However, the scheme still uses different power conversion units, i.e. converter module 1 and converter module 2, to charge the battery and discharge the battery/supply power to the load separately.

Currently, a charge and discharge all-in-one device with lower device costs is required.

### BRIEF SUMMARY

From the existing technology, the object of the present application is to provide a battery charging and discharging device and a rechargeable power supply, through which, the cost of the device, cable and installation required by the charging and discharging device may be significantly reduced, thereby significantly reducing its cost.

In the first aspect of the present application, the object is solved by a battery charging and discharging device, comprising:
a power conversion unit, which is configured to convert AC power into DC power and convert DC power into AC or DC power;
a connecting end of the energy storage battery pack, which is configured to connect the energy storage battery pack;
a connecting end of charging and discharging, which is configured to connect the charging power supply or a device to be charged or a load;
a charging switch, comprising a first charging switch and a second charging switch, wherein the first charging switch is arranged in a connection line between the connecting end of charging and discharging and the input of the power conversion unit, and the second charging switch is arranged in a connection line between the output of the power conversion unit and the connecting end of the energy storage battery pack, wherein the connected power storage battery pack may be charged when the first charging switch and the second charging switch are closed; and
a discharging switch, comprising a first discharging switch and a second discharging switch, wherein the first discharging switch is arranged in a connection line between the connecting end of the energy storage battery pack and the input of the power conversion unit, and the second discharging switch is arranged in a connection line between the output of the power conversion unit and the connecting end of charging and discharging, wherein the connected power storage battery pack may be discharged when the first discharging switch and the second discharging switch are closed.

As specified in one of the preferred schemes of the present application, the device also comprises a controller, which is configured to perform the following actions:

Closing the first charging switch and the second charging switch when a charging signal indicating that the charge operation should be performed is received; and

Closing the first discharging switch and the second discharging switch when a discharging signal indicating that the discharge operation should be performed is received.

With this preferred scheme, automated charge and discharge operations may be achieved. A controller may be implemented with software, hardware, and/or firmware. The controller may also be integrated into the power conversion unit.

In an extension scheme of the present application, the first charging switch, the second charging switch, the first discharge switch and the second discharge switch includes at least one switch. In an extension scheme of the present application, the types of the first charging switch, the second charging switch, the first discharge switch and the second discharge switch are contactors, circuit breakers, or relays. Other types of switches are also conceivable, such as semiconductor switches, physical switches, and so on.

As specified in one of the preferred schemes of the present application, the connecting end of charging and discharging comprises a terminal compatible with the AC DC input and the DC output. The terminal comprises a plug, a socket, a cable connector, and other implementations that are understood by ordinary technicians in the field.

In a preferred scheme of the present application, the terminal at least has four cores, three of which may be used as fire wire input of three-phase AC, the other one of which as protective ground; two of the three cores of fire wire input of three-phase AC may be connected to the positive and negative pole of the DC power supply, to receive the DC input; and two of the three cores of fire wire input of three-phase AC may also be used as the positive and negative pole of the DC output to charge the electric vehicle or other DC load. This preferred scheme enables AC or DC power to charge the energy storage battery pack (also known as "replenishment"), as well as the energy storage battery pack to charge AC or DC appliances or batteries.

In an extension scheme of the present application, the terminal has three cores, two of which may be used as single-phase AC input and the other one of which as a protective ground; the two cores as single-phase AC input may be connected to the positive and negative poles of DC power supply, to receive DC input; and the two cores as single-phase AC input may also be used as positive and negative poles of DC output to charge electric vehicles or other DC loads. This preferred scheme enables AC or DC power to charge the energy storage battery pack (also known as "replenishment"), as well as the energy storage battery pack to charge AC or DC appliances or batteries.

In an extension scheme of the present application, the terminal at least has five cores, three of which may be used as fire wire input of three-phase AC, one of which as zero-line, and the other one of which as protective ground; any two of the three cores of fire wire input of three-phase AC and zero-line may be connected to the positive and negative poles of DC power supply, to receive DC input; and any two of the three cores of fire wire input of three-phase AC and zero-line may also be used as positive and negative poles of DC output to charge electric vehicles or other DC loads. This preferred scheme enables AC or DC power to charge the energy storage battery pack (also known as "replenishment"), as well as the energy storage battery pack to charge AC or DC appliances or batteries.

It should be declared that the extension scheme of the present application also contains other implementations may be understood by ordinary technicians in the field, for example, the ground protection function is realized by means of shielding or multi-point grounding without using a separate protective ground terminal. In addition, each of the first charging switch, the second charging switch, the first discharging switch and the second discharging switch contain at least one contact, the number of contacts corresponds with the number of charging/discharging terminals of the connecting end of charging and discharging.

In the second aspect of the present application, the aforementioned object is solved by a rechargeable power supply comprising:
a power conversion unit, which is configured to convert AC power into DC power and convert DC power into AC or DC power;
an energy storage battery pack, which is configured to be charged in a charged state and discharged in a discharged state;
a connecting end of charging and discharging, which is configured to connect the charging power supply or a device to be charged or a load;
a charging switch, comprising a first charging switch and a second charging switch, wherein the first charging switch is arranged in a connection line between the connecting end of charging and discharging and the input of the power conversion unit, and the second charging switch is arranged in a connection line between the output of the power conversion unit and the energy storage battery pack, wherein the connected power storage battery pack may be charged when the first charging switch and the second charging switch are closed; and
a discharging switch, comprising a first discharging switch and a second discharging switch, wherein the first discharging switch is arranged in a connection line between the energy storage battery pack and the input of the power conversion unit, and the second discharging switch is arranged in a connection line between the output of the power conversion unit and the connecting end of charging and discharging, wherein the connected power storage battery pack may be charged when the first discharging switch and the second discharging switch are closed.

In an extension scheme of the present application, there is interlock logic between the first charging switch and the second discharging switch, so that the first charging switch and the second discharging switch cannot be closed at the same time; and/or there is interlock logic between the first discharging switch and the second charging switch, so that the first discharging switch and the second charging switch cannot be closed at the same time. The interlock logic comprises but is not limited to mechanical, electrical, software and other implementations.

In an extension scheme of the present application, the energy storage battery pack comprises multiple rechargeable batteries connected in series or parallel. However, it should be pointed out that in the present application, the energy storage battery pack also covers the case of a single battery or storage battery.

In another extension scheme of the present application, the charging power supply or the device to be charged is one of the following: power grid, storage battery, electric vehicle, and on-board power supply. The application may also be connected with various electrical loads, such as various electrical appliances.

The application also relates to a charging vehicle which has a rechargeable power supply according to the present application, wherein the charging vehicle may move in order to charge an electric vehicle or other device. In the case of using a rechargeable power supply of the present application, the charging vehicle may be docked with various loads and charging power supply, such as power grid and storage battery, and the scheme of the present application may significantly reduce the volume of the charging vehicle by adopting fewer devices. However, the application is also applicable to other applications, such as household emergency power supply, mobile phone charger and so on.

The application has at least the following beneficial effects: (1) through the present application, the need of using multiple power conversion units for charging and discharging operation may be eliminated, instead, it is only necessary to use a single power conversion unit for charging and discharging operation, thereby not only reducing the cost of the device, but also reducing the cost of cables, and meanwhile reducing the space demand of charging and discharging device, so that the charging and discharging device may be realized towards the goal of low cost, compactness; (2) the cost is reduced and user operation is simpler by using a single port for charging and discharging operations, which reduces the number of ports.

### BRIEF DESCRIPTION OF THE DRAWINGS

The application is set forth below in more detail with reference to the detailed embodiments in conjunction with the drawings.
Figure 1 shows a flowchart of a rechargeable power supply according to the prior art; and
Figure 2 shows a flowchart of a rechargeable power supply according to the application.

### DETAILED DESCRIPTION

It should be pointed out that, components in the drawings may be shown in an exaggerated form for the purpose of illustration, instead of being true to scale . In the drawings, same or functionally same components are provided with same reference numerals.

In the present application, each embodiment is only intended to illustrate the solution of the present application, and should not be construed as limiting.

In the present application, unless otherwise specified, the articles "a" and "an" do not exclude the scenario of multiple elements.

It should also be noted that in the embodiments of the present application, for clarity and simplicity, only a part of the parts or components may be shown, but those of ordinary skill in the art can understand that under the teaching of the present application, required parts or components may be added according to concrete scenarios.

It should also be noted that within the scope of the present application, the terms "same", "equal", "equal to" and other terms do not mean that the two values are absolutely equal, but allow certain reasonable errors, that is, these terms also encompass the meanings of "substantially the same", "substantially equal", and "substantially equal to".

In addition, the numbers of the steps of methods of the present application are not intended to limit the execution order of the method steps. Unless otherwise specified, the method steps may be performed in a different order.

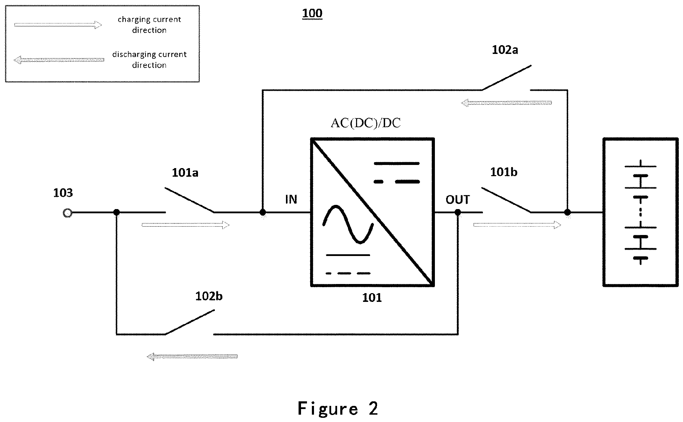

Figure 2 shows a flowchart of a rechargeable power supply according to the application.

As shown in Figure 2, a rechargeable power supply 100 comprises the following components:
- a power conversion unit 101, which is configured to convert AC energy from the grid into DC and convert DC energy stored in energy storage battery packs into AC or DC energy. The power conversion unit 101 has, for example, an AC/DC converter (e.g. a three-phase AC/DC converter) and a DC/AC or DC/DC converter.
- an energy storage battery pack 102, which is configured to be charged in a charged state and discharged in a discharged state. The energy storage battery pack comprises single or multiple batteries. In the case of multiple batteries, the battery may be connected in series or in parallel. The energy storage battery pack 102 for example may be a storage battery or lithium-ion battery.
- a connecting end of charging and discharging 103, which is configured to connect the charging power supply or the device to be charged or load. The charging power supply or the device to be charged for example may be power grid, storage battery, electric vehicle, and so on. The load may be a variety of appliances, such as mobile devices or appliances. The connecting end of charging and discharging 103 for example may be a terminal with four or five cores compatible with three-phase AC inputs and DC inputs/outputs, or a terminal with three cores compatible with single-phase AC inputs and DC inputs/outputs, or other types of terminals. The connecting end of charging and discharging 103 enables AC or DC power to charge the energy storage battery pack (also known as "replenishment"), as well as the energy storage battery pack to charge an electric vehicle or supply power to other types of loads.
- a charging switch, comprising a first charging switch 101a and a second charging switch 101b, wherein the first charging switch 101a is arranged in the connection line between the connecting end of charging and discharging 103 and the input IN of the power conversion unit 101, and the second charging switch 101b is arranged in the connection line between the output OUT of the power conversion unit101 and the energy storage battery pack 102, wherein the first charging switch 101a and the second charging switch 101b may charge the power storage battery pack 102 for example by the grid connected to the connecting end of charging and discharging 103 when closed(See charging current direction).
- a discharging switch, comprising a first discharging switch 102a and a second discharging switch 102b, wherein the first discharging switch 102a is arranged in the connection line between the energy storage battery pack 102 and the input IN of the power conversion unit101, and the second discharging switch 102b is arranged in the connection line between the output OUT of the power conversion unit and the connecting end of charging and discharging 103, wherein the first discharging switch 102a and the second discharging switch 102b may discharge the power storage battery pack when closed, for example, by charging a battery connected to the connecting end of charging and discharging 103 or powering the load connected to it. The first charging switch 101a, the second charging switch 101b, the first discharging switch 102a and the second discharging switch 102b are contactors, such as relays, thus achieving electronic switching on and off.

The workflow of the rechargeable power supply 100 of the present application is described below.

Charging process: closing the first charging switch 101a and the second charging switch 101b manually or under the control of the controller, AC current or DC current entering the power conversion unit 101 from the AC grid or other power supply, and being converted to a suitable charging current and voltage for energy storage battery pack 102.

Discharging process: closing the first discharging switch 102a and the second discharging switch 102b manually or under the control of the controller, the current entering the power conversion unit 101 from the energy storage battery pack 102, and being converted to be suitable for powering the loads connected to the connecting end of charging and discharging 103, or charging battery or powering the grid by feeding into the AC grid.

The application has at least the following beneficial effects: (1) through the present application, the need of using multiple power conversion units for charging and discharging operation may be eliminated, instead, it is possible to only use a single power conversion unit for charging and discharging operation, which not only reduces the cost of the device, but also reduces the cost of cables, and meanwhile reduces the space demand of charging and discharging device, so that the charging and discharging device may be implemented towards the goal of low cost, compactness; (2) the cost is reduced and user operation is simpler by using a single port for charging and discharging operations, which reduces the number of ports.

Although some embodiments of the invention are described in the present application document, those skilled in the art may understand that these embodiments are shown merely as examples. Under the teachings of the invention, various variations, alternatives and modifications are conceivable to those skilled in the art. The appended claims are intended to define the scope of the invention and hereby encompass the claims themselves and equivalent methods and structures.

## Claims

1. A battery charging and discharging device, comprising:
a power conversion unit, configured to convert AC power into DC power and convert DC power into AC or DC power;
a connecting end of the energy storage battery pack, configured to connect the energy storage battery pack;
a connecting end of charging and discharging, configured to connect the charging power supply or a device to be charged or a load;
a charging switch, comprising a first charging switch and a second charging switch, wherein the first charging switch is arranged in a connection line between the connecting end of charging and discharging and the input of the power conversion unit, and the second charging switch is arranged in a connection line between the output of the power conversion unit and the connecting end of the energy storage battery pack, wherein the connected power storage battery pack may be charged when the first charging switch and the second charging switch are closed; and
a discharging switch, comprising a first discharging switch and a second discharging switch, wherein the first discharging switch is arranged in a connection line between the connecting end of the energy storage battery pack and the input of the power conversion unit, and the second discharging switch is arranged in a connection line between the output of the power conversion unit and the connecting end of charging and discharging, wherein the connected power storage battery pack may be discharged when the first discharging switch and the second discharging switch are closed.

2. The device according to claim 1, further comprising a controller configured to perform the following actions:
closing the first charging switch and the second charging switch when a charging signal indicating that the charge operation should be performed is received; and
closing the first discharging switch and the second discharging switch when a discharging signal indicating that the discharge operation should be performed is received.

3. The device according to claim 1, wherein each of the first charging switch, the second charging switch, the first discharge switch and the second discharge switch comprises at least one switch.

4. The device according to claim 1, wherein the first charging switch, the second charging switch, the first discharge switch and the second discharge switch are selected from the groups including the following: contactor, circuit breaker, relay, and semiconductor switch.

5. The device according to claim 1, wherein the connecting ends have at least four cores, three of which are used as fire wire input of three-phase AC, and the other one of which is used as protective ground; two of the three cores of fire wire input of three-phase AC may be connected to the positive and negative poles of the DC power supply, to receive the DC input; and two of the three cores of fire wire input of three-phase AC may also be used as the positive and negative pole of the DC output to charge DC loads; or
the connecting ends have three cores, two of which are used as single-phase AC input and the other one of which is used as a protective ground; the two cores as single-phase AC input may be connected to the positive and negative poles of DC power supply, to receive DC input; and the two cores as single-phase AC input may also be used as positive and negative poles of DC output to charge DC loads; or
the connecting ends have at least has five cores, three of which are used as fire wire input of three-phase AC, one of which is used as zero-line, and the other one of which is used as protective ground; any two of the three cores of fire wire input of three-phase AC and zero-line may be connected to the positive and negative poles of DC power supply, to accept DC input; and any two of the three cores of fire wire input of three-phase AC and zero-line may also be used as positive and negative poles of DC output to charge DC loads.

6. The device according to claim 1, wherein the connecting end of charging and discharging comprises a three-hole socket for AC and a two-hole socket for DC.

7. The device according to claim 1, wherein each of the first charging switch, the second charging switch, the first discharge switch and the second discharge switch comprises at least one contact, the number of the contact corresponding to the number of charging/discharging terminals of the connecting end of charging and discharging.

8. The device according to claim 1, comprising:
an interlock logic between the first charging switch and the second discharging switch, so that the first charging switch and the second discharging switch cannot be closed at the same time; and/or
an interlock logic between the first discharging switch and the second charging switch, so that the first discharging switch and the second charging switch cannot be closed at the same time.

9. A rechargeable power supply, comprising:
a power conversion unit, configured to convert AC power into DC power and convert DC power into AC or DC power;
an energy storage battery pack, configured to be charged in a charged state and discharged in a discharged state;
a connecting end of charging and discharging, configured to connect the charging power supply or a device to be charged or a load;
a charging switch, comprising a first charging switch and a second charging switch, wherein the first charging switch is arranged in a connection line between the connecting end of charging and discharging and the input of the power conversion unit, and the second charging switch is arranged in a connection line between the output of the power conversion unit and the energy storage battery pack, wherein the connected power storage battery pack may be discharged when the first charging switch and the second charging switch are closed; and
a discharging switch, comprising a first discharging switch and a second discharging switch, wherein the first discharging switch is arranged in a connection line between the energy storage battery pack and the input of the power conversion unit, and the second discharging switch is arranged in a connection line between the output of the power conversion unit and the connecting end of charging and discharging, wherein the connected power storage battery pack may be discharged when the first discharging switch and the second discharging switch are closed.

10. The rechargeable power supply according to claim 9, wherein the energy storage battery pack comprises multiple rechargeable batteries connected in series or parallel.

11. The rechargeable power supply according to claim 9, wherein the charging power supply or the device to be charged is one of the following: power grid, storage battery, and electric vehicle.

12. A charging vehicle, comprising the rechargeable power supply according to one of claims 9 to 11, wherein the charging vehicle may move in order to charge an electric vehicle or other loads.
